# EUROPEAN PATENT APPLICATION

(11) **EP 1 954 054 A1**
(43) Date of publication of application: **06.08.2008**
(21) Application number: 07300769.2
(22) Date of filing: 02.02.2007
(51) Int. Cl.: H04N 7/24, H04N 5/00

(54) **System and method for transporting interactive marks**

(71) Applicant: Thomson Licensing, 92100 Boulogne-Billancourt (FR)
(72) Inventor: Legallais, Yvon, 35000 Rennes (FR); Laurent, Anthony, 35000 Rennes (FR); Bichot, Guillaume, 35630 La Chapelle Chaussée (FR); Campana, David, Princeton, NJ 08540 (US)
(74) Representative: Ruellan-Lemonnier, Brigitte

(57) **Abstract**

The present invention concerns a system and a method for synchronizing interactive content with individual video stream. In particular, it concerns a method for generating an interactive mark, comprising, at a generating device (2.4, 3.4), the steps of receiving (S3) video packets of a video stream, creating an interactive mark intended to enable an interactive service during a period of the video stream, periodically inserting the interactive mark into Internet Protocol packets, noted IP-based packet, said IP-based packets being synchronized with packets that transport the associated video stream, and sending (S7) the IP-based packets.

## Description

The present invention relates generally to the transport of interactive mark associated with an audio-video content, and in particular to the transport on an IP-based network.

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Interactive service mechanism provides synchronization between a video program and an application a user can interact with, in order to provide added or interactive services to the user. Examples of interactive service are voting applications, interactive games, getting information about a product, product ordering. The video program may be live, streamed out from a camera to a broadcaster and ultimately to a terminal, or pre-recorded and streamed from a server to a terminal. It may also be played locally in the terminal from a file. An interactive service generally requires to be synchronized with a video program. Synchronization information is managed and sent from the network side and retrieved by the terminal. This permits to know when to activate the associated interactive application or part of an interactive application called interactive object.

An interactive object is a piece of software (executable by a processor or interpretable by a virtual machine) as for instance a so called applet or script that uses a Man to Machine Interface to provide the terminal's user the ability to interact with video programs the user is currently watching. In video distribution systems, interactive content is generally transmitted using end-to-end solutions, from the content provider, through the broadcaster up to the terminal. The content provider and the broadcaster sometime form only one entity.

The vertical blanking interval, noted VBI, is the time found between the last line of one video frame and the beginning of the next frame. Data transmitted during the VBI, noted VBI data hereinafter, is not displayed on the screen. With analog or digital video, the VBI is used to carry interactive data such as Teletext, closed caption, or a URL (Uniform Resource Locator). For example, a marker is inserted within the VBI of a video sequence. A terminal, which is a TV set, is able to detect this marker. When it detects the marker, it activates the associated embedded URL to provide the interactive service.

With a digital compression such as MPEG2, the VBI data is not transmitted in the video frames from the head-end up to the terminal. The VBI data is embedded into a separate stream. The separate stream is synchronized to the video frame. In DVB systems, the interactive information such as closed caption and teletext is carried within a dedicated Packetized Elementary Stream, noted PES. It is specified in the ETSI standard, ETSI EN 301 775 v1.2.1, Digital Video Broadcasting (DVB); Specification for the carriage of Vertical Blanking Information (VBI) data in DVB bitstreams, which specifies a new VBI standard to be added to MPEG-2 and DVB. It handles the transmission of data intended to be transcoded into the VBI of an MPEG2 decoded video.

According to the existing method, the transmission of the interactive content is correlated to the video content.

The present invention attempts to remedy at least some of the concerns connected with the interactive content distribution in the prior art, by providing a system and a method for synchronizing interactive content distribution with audio-video distribution.

To this end, the invention relates to a method for generating an interactive mark comprising, at a generating device, the steps of receiving video packets of a video stream, creating an interactive mark intended to enable an interactive service during a period of the video stream, periodically inserting the interactive mark into Internet Protocol packets, noted IP-based packet, the IP-based packets being synchronized with packets that transport the associated video stream, and sending (S7) the IP-based packets.

Surprisingly, the interactive content is periodically sent to the receivers. This permits the receivers to set up the interactive service even if they do not get the video stream at the beginning of the distribution. The interactive mark being sent on an IP packet, this allows providing an interactive mark uncorrelated from the audio-video stream distribution.

According to an embodiment, the method comprises the step of receiving a script comprising information on the way to create and send the interactive mark. The interactive service may be then built independently from the audio-video. This permits to adapt the interactive mark transport to the Internet Protocol.

According to an embodiment of the invention, the interactive mark comprises information on the way to manage the interactivity at the receiver of the interactive mark.

According to an embodiment, the method comprises the step of using a detected interactive mark embedded in the received video stream. The interactive mark present in the audio-video is retransmitted on the Internet Protocol.

According to an embodiment, the step of creating an interactive mark is performed on reception of an event. The interactive mark is independent of the audio video content. The event reception triggers the interactive content generation. The behavior of the generating device is indicated by the received script.

Another object of the invention is a method for generating an interactive mark. It comprises, at a generating device, the steps of receiving a video packet of a video stream, creating an interactive mark, receiving an IP-based packet embedding the video packet, inserting the interactive mark into the IP-based packet, sending the IP-based packet.

The synchronization with the audio-video packet is not required as the interactive mark is embedded within the same packet.

Another object of the invention is a method in a terminal for setting up interactivity, comprising the steps of receiving a set of information that defines the behavior of the terminal when detecting an interactive mark.

The behavior of the terminal is adapted for each interactive mark. The interactive service is independent of the interactive mark. The interactive mark launches the interactive service under the rules as defined in the set of information.

According to an embodiment, the method further comprises the step of receiving the interactive mark in a first IP-based packet, receiving the associated video stream, generating the interactive object corresponding to the mark, and launching the interactive service with the associated video stream.

According to an embodiment, the interactive mark comprises information on the way to set up the interactive service at the receiver of the interactive mark

According to an embodiment, the method comprises the step of identifying in the interactive mark the remaining time for performing an interactive service, and launching the interactive service if the remaining time is long enough.

Another object of the invention is a method for inserting an interactive mark within a MP4 file comprising the step of embedding an interactive track into either the subtitle track or the hint track of an MP4 file, sending the file.

Another object of the invention is a method for transporting an interactive mark within a MP4 file comprising the step of receiving a MP4 file with an interactive mark inserted either in the subtitle track or in the hint track, identifying the interactive mark, synchronizing the interactive mark with the video packet, creating an IP-based packet comprising the interactive mark, and sending the IP-based packet.

Another object of the invention is a computer program product comprising program code instructions for executing the steps of the process according to the invention, when that program is executed on a computer. By "computer program product", it is meant a computer program support, which may consist not only in a storing space containing the program, such as a diskette or a cassette, but also in a signal, such as an electrical or optical signal.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

The invention will be better understood and illustrated by means of the following embodiment and execution examples, in no way limitative, with reference to the appended figures on which:
- Figure 1 is a block diagram of a system according to the prior art;
- Figure 2 is a block diagram of an the system compliant with a first embodiment;
- Figure 3 is a block diagram of an the system compliant with a second embodiment;
- Figure 4 is a block diagram of an the system compliant with a third embodiment;
- Figure 5 is a block diagram of a terminal compliant with the embodiments;
- Figure 6 is a block diagram of an Interactive Bridge/Event Generator device compliant with the embodiment;
- Figure 7 is a block diagram of an interactive controller device compliant with the embodiment; and
- Figure 8 is a flow chart according to the first embodiment.

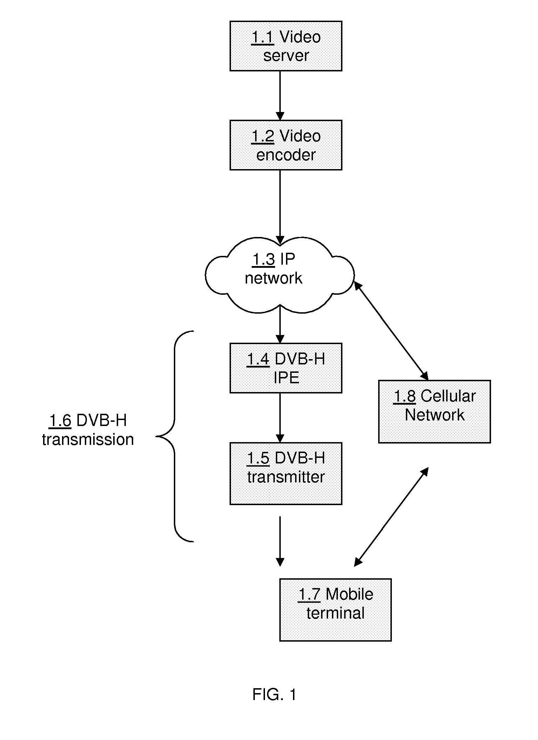

In Figures 1 to 7, the represented blocks are purely functional entities, which do not necessarily correspond to physically separate entities. Namely, they could be developed in the form of software, or be implemented in one or several integrated circuits.

The exemplary embodiment comes within the framework of a transmission of audio-video content and interactive marks over lP, but the invention is not limited to this particular environment and may be applied within other frameworks where audio-video content and interactive marks are transported.

The delivery of video services over IP is usually performed with Real Time Protocol, noted RTP. RTP is a transport layer for application transmitting real time data. RTP is specified in the RFC 3550 "RTP: A Transport Protocol for Real-Time Applications". RTP provides among others the following services:
- Payload-type identification - Indication of what kind of content is being carried;
- Sequence numbering - packet sequence number;
- Time stamping - presentation time of the content being carried in the packet; and
- Delivery monitoring and synchronization through the RTP Control Protocol noted RTCP.

RTCP is a protocol associated to RTP. It is also defined in the RFC 3550. A sender of RTP packets periodically transmits control packets, also noted sender-report packets, to receivers that are devices participating to a streaming multimedia session. A RTCP sender-report packet contains the timestamp of one of the associated RTP stream packets and the corresponding wallclock time. The wallclock time is the absolute date and time that is shared among all related RTP stream generators. Receivers use this association to synchronize the presentation of audio and video packets and any other associated RTP stream. Receivers link their RTP timestamps using the timestamp pairs in RTCP sender-report packets.

In particular, the RFC 4396 specifies "the RTP Payload Format for 3^{rd} Generation Partnership Project (3GPP) Timed Text". Timed Text can be synchronized with audio/video contents and used in applications such as captioning, titling, and multimedia presentations.

According to the embodiment, the interactive object can be a piece of executable code, or a script that may be encoded in Extensible Markup Language, XML. An interactive object Identifier, noted 101, uniquely points out an interactive object. The lOl could simply be an URL or can follow any convenient format not specified here. This identifier is enclosed in an interactive mark that is associated with the video stream (more precisely a particular video frame) according to the methods described hereinafter. An lOl can be re-used, in other words re-associated to another interactive object. Anyway, it should always be possible to associate an 101 with one and only one interactive object at a particular instant.

The interactive mark is associated with a particular video frame and comprises the 101 and possibly other information depending on the embodiments described hereinafter.

The interactive object descriptor noted IOD, is a set of information that is associated with the interactive object. It defines the behavior of the terminal when detecting the interactive mark. It is coded with any language including XML and may comprise among others the following fields:
- the IOI,
- the Video Program/Service Reference,
- the Time-to-Leave,
- the Offset,
- the Duration, and
- the Object.

The usage of an IOD is optional. If used, the IOI and the Object fields are then mandatory. The other fields are optional.

The lOl is the identifier of the Interactive object.

The Video Program/Service Reference points out to the video stream the interactive object is attached to. An interactive object can be attached to a specific video stream. The interactive object may also be used with any video stream.

The Time-to-Leave, noted TTL, is the time during which the Interactive object can be referenced and used. Once the TTL expires, the Interactive object may be deleted and the corresponding interactive descriptor too.

The Offset is a delay the terminal waits before activating the Interactive object once it detects the interactive mark.

The Duration is the time during which the terminal activates the interactive object when triggered by the detection of the interactive mark. The duration may be indicated in a number of seconds. The duration may also be indicated as a function of the mark. For example, the interactive object should be activated as long as the mark is detected, or until the tenth mark. Any function of the mark may be considered.

The Object represents the Interactive object itself or is a reference (e.g. URL) that permits to retrieve the Interactive object.

Figure 1 represents a system for video distribution according to the prior art. It comprises a video server 1.1, which sends the video program in an uncompressed (or MPEG2) format. The video program comprises audio-video information and may comprise VBI data. The video broadcast network 1.6 is compliant with the ETSI TR 102 469 V1.1.1 (2006-05), "Digital Video Broadcasting (DVB); IP Datacast over DVB-H: Architecture".

The video encoder 1.2 encodes the video program it receives in an uncompressed format or MPEG2 format into compressed audio/video/subtitling streams over RTP/RTCP. The video is for example encoded according to the UIT-T H.264 standard, audio is encoded according to the Advanced Audio Coding standard and VBI information for subtitling (closed caption) according to the RFC4396. The RTP streams are then delivered to the mobile terminal 1.7 over the IP network 1.3 and the DVB-H broadcast network 1.6. The IP network may be any IP network supporting multicast transmission, such as the Internet. The DVB-H transmission network comprises among others a DVB-H IPE 1.4 and a DVB-H transmitter 1.5. Of course, the embodiment is not limited to the DVB-H network. It could apply to any other broadband distribution network such as the digital subscriber line family.

The system also comprises a return channel through the cellular network 1.8. The Mobile terminal may receive and send data through the return channel, in particular interactive data. Of course, the return channel might be any other type of channel that provides a point-to-point bidirectional connection.

Different embodiments are described hereafter for:
- allowing transmitting over IP/UDP/RTP interactive marks present within the VBI information set (interactive bridge) of a non IP/UDP/RTP incoming stream,
- generating interactive marks over IP/UDP/RTP based on a MMI (Man to Machine Interface) and control scripts (interactive generator), and
- building interactive video program files and generating associated interactive IP/UDP/RTP streams by reading this interactive file.

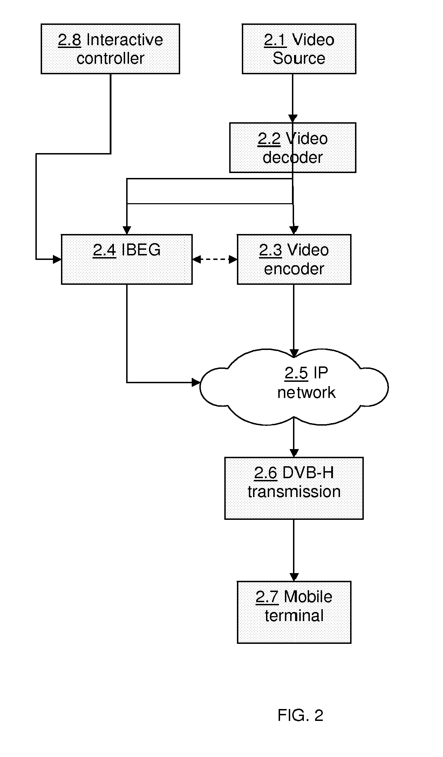

A system according to the first embodiment of the interactive object triggering mechanism is represented in figure 2. The system is similar to the one of the figure 1, with differences detailed hereinafter. Only one terminal is represented, but it obvious that it might comprise more than one terminal.

The video source 2.1 can be a server or any other video program source. The video source broadcasts or multicasts the video program that comprises audio, video and VBI data into a compressed video format such as DVB/MPEG Transport Stream.

A video decoder 2.2 receives the compressed video content. It decodes the DVB/MPEG TS and transmits the uncompressed video program to a video encoder 2.3.

The Interactive Bridge/Event Generator 2.4, noted IBEG hereinafter, is intended to capture the video program and detect the VBI content in the program. It captures the video program either at the input of the video decoder or at the output of the video decoder, which corresponds also to the input of the video encoder. Capturing the video at the input of the decoder ensures that the VBI is present in the frame; the decoder may possibly remove the VBI information that might not be available at the output of the decoder. Anyway capturing the video at the input of the decoder requires the IBEG to decode the video. Therefore, preferably, the IBEG captures the video at the input of the decoder, and if not possible at the output of the decoder.

The IBEG is also intended to build a new packet to send the detected VBI, with a time stamp corresponding to the one of the video program. According to the embodiment, the packet is sent over IP/UDP/TCP.

The IBEG may also send a packet with interactive content after receiving an event from the interactive controller 2.8. This even-driven method does not require the IBEG to detect anything within the incoming video program. The selection of the video frame is based on the moment indicated by the event received from the interactive controller. The IBEG then generates an interactive mark or a series of interactive marks each time it receives the event.

The interactive controller 2.8 is intended to control and configure the IBEG. It configures the IBEG through configuration scripts it sends to the IBEG. The configuration script is used by the IBEG for detecting the video frame in the incoming video and for specifying the behavior of the IBEG regarding the interactive mark generation. According to the embodiment, the script comprises the following fields: Incoming Video Program, Incoming Video Event Detection, Incoming Video Event Identifier and Marking Process.

The Incoming Video Program field permits to identify a video stream among several video streams, when the IBEG is able to capture several individual streams, e.g. in case of an incoming MPEG2 stream.

The Incoming Video Event Detection field indicates the method for selecting the video frame with which an interactive mark will be attached by the IBEG. It may take any value among the following: WATERMARKING, VBI, TIME CODE, AUDIO SAMPLE, TIME LINE. The selection method may depend on the interactive content type or on the audio-video content. WATERMARKING means that the video that comprises a particular digital watermark shall be selected. VBI means that the video that comprises a particular VBI shall be selected. TIME CODE means that the video that comprises a particular time code shall be selected. AUDIO SAMPLE means that, in case of uncompressed video, the video-video content that comprises a particular audio sample shall be selected. TIME LINE indicates the elapsed time since the beginning of a particular video program; and the video that corresponds to that moment shall be selected.

The Incoming Video Event Identifier field is related to the previous field. It indicates the identifier of the interactive content that shall be detected. It may be the digital watermark identifier, the VBI data value, etc. This field is not required with the even-driven method.

The Marking Process field indicates to the IBEG how to generate the mark. The field gathers information on the content of the Interactive mark, the marking period and the marking rhythm. The interactive mark content is identified with the 101. The marking period indicates how long to generate the mark. The marking rhythm indicates the frequency of the mark generation; a mark can be generated every N seconds, or N frames, or can be linked with every video frame of type M. It is not necessary to mark all packets. The IBEG can generate a mark every N frames in order to save bandwidth. At least one mark should be present at a regular interval in order to allow any terminal switching on in the middle of an interactive video sequence to quickly trigger the corresponding interactive object(s).

The Marking Process field may comprise additional information depending on the way the mark shall be generated.

This list of fields in the configuration script is not limitative. It may comprise other information that permits to specify the automatic behavior of the IBEG regarding incoming video program event, such as video frame detection, VBI information detection or interactive mark generation.

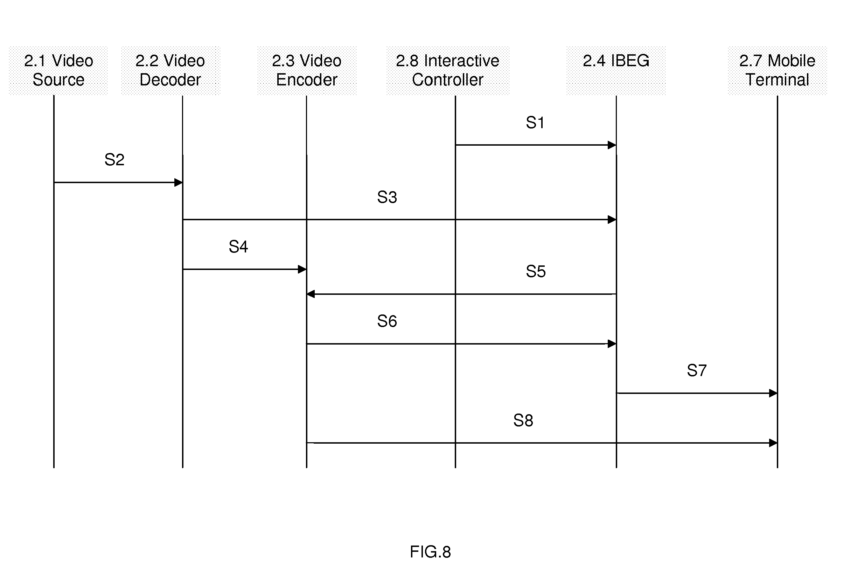

The method of the first embodiment is represented in figure 8.

First, the IBEG receives the script from the Interactive controller, Step S1. The Incoming Video Event Detection field of the script is set to VBI.

The video program is sent by the video source 2.1 to the video decoder 2.2 at step S2. At step S4, the video program is then sent to the video encoder, which encodes the video program into an uncompressed format or MPEG2 format into compressed audio/video/subtitling streams over RTP/RTCP. At step S8, the video encoder sends the video program to the mobile terminal.

The IBEG receives the video program at the output of the video decoder, at step S3. It is encoded into MPEG format. The IBEG receives the MPEG signal and detects the VBI. It then identifies the frame corresponding to the detected VBI. To identify the frame, it gets the absolute time associated with the video frame, using the SMPTE time code, as defined in "Society of Motion Picture and Television Engineers, SMPTE 12M-1999 - Television, Audio and Film - Time and Control Code". Of course, other means for identifying the absolute time might be used. Alternatively, the IBEG could identify the frame with other means.

The IBEG then indicates the absolute time corresponding to the frame to the video encoder, step S5. The video encoder then provides the RTP timestamp corresponding to the frame, step S6. This permits the video encoder to convert the absolute time into a RTP timestamp. This corresponds to the same RTP timestamp that is used by the video encoder when encapsulating the corresponding compressed video frames into the IP/UDP/RTP protocol.

Preferably, the IBEG is collocated with the video encoder. This facilitates the association between the video frame to be marked, identified by e.g. an absolute time code, and the RTP time stamp of the RTP packet that is used to carry such video frame.

At step S7, the IBEG 2.4 generates an independent IP stream using RTP/RTCP transport protocols. This is the interactive RTP packet. The RTP header contains a presentation time stamp. According to the embodiment, this is the time stamp of the marked video frame. The interactive packet is then synchronized to the marked video frame. The interactive stream RTP packet payload contains the IOI of the interactive object. The IBEG generates interactive RTP packets according to the rules indicated in the script received from the interactive controller; the rules indicate the period and the rhythm.

Considering one interactive mark, the IBEG may generate several interactive RTP packets having the same time stamp of the first video frame associated with the interactive mark. In such a way, a terminal that is switched on after the appearance of the first mark can still detect the mark. The rhythm of interactive RTP packets transmission is set according to bandwidth constraints and precision in detecting the mark.

Upon reception of the interactive RTP packets, the mobile terminal 2.7 extracts the time stamp and the 101. It then waits for the detection of the corresponding video RTP packet from the video encoder that gathers the video frame on which the interactive object should be triggered. When the video frame corresponding to the interactive object is going to be displayed, the interactive object is triggered.

The interactive RTP packet comprises in its payload part the interactive mark. The interactive mark comprises least the IOI, and may comprise the following fields:
- LocFlag is a flag that indicating whether the video packet is the first or one of the first packets having this video mark or not;
- FirstLoc is a time stamp of the first video frame that gathered this video tag;
- Action fields permits to indicate the activation or deactivation of the interactive sequence; it takes the values launch or cancel;
- Duration is the duration of the interactive sequence.

It may also comprise one or more interactive descriptor(s). It may also comprise one or more interactive object(s).

The association between the various RTP streams composing a coherent service like a video streaming service is ensured by a Session Description Protocol as defined in the RFC4566. SDP is intended for describing multimedia sessions for the purposes of session announcement, session invitation, and other forms of multimedia session initiation. A SDP file provides the list of all independent streams, identified by their IP/UDP destination multicast address and their port. According to the embodiment, the SDP file includes the interactive stream as part of the overall video program. It may be generated by the encoder, the IBEG or any other network component. Preferably, the IBEG is embedded into the encoder 2.2 in order to generate a consistent SDP file.

Alternatively, a transport protocol other than RTP may be used for the interactive stream. The condition is that this interactive protocol allows fast packets delivery. In that case, the IBEG sends the interactive packets using a fast delivery protocol over IP. Notably, UDP is convenient. The interactive packet gathers the time stamp of the associated video RTP packet and the lOl.

Several interactive marks (i.e. lOl) can be transported in parallel. In other words, an interactive packet may gather several interactive IOIs. Several interactive objects can be associated to the same video frame.

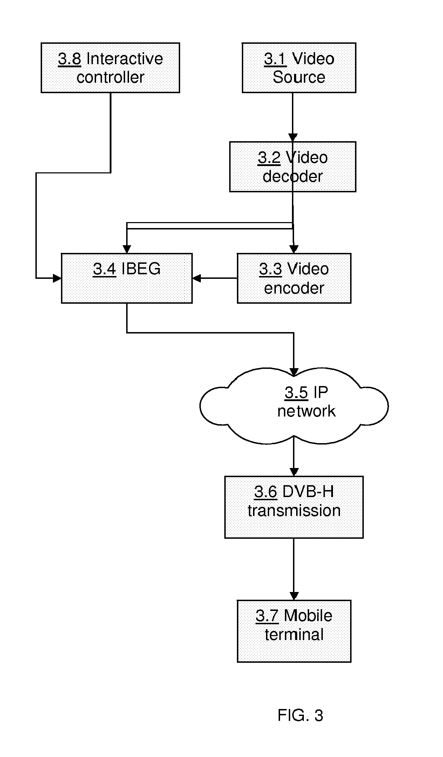

A system according to the second embodiment of the interactive object triggering mechanism is represented in figure 3.

The video server 3.1, the DVB/MPEG TS decoder 3.2 and the video encoder 3.3 perform the same features as in the previous embodiment illustrated in the figure 2.

The difference with the previous embodiment is that the interactive mark generated over the IP network by the IBEG is part of the video RTP stream. More precisely, it is embedded in the RTP header extension that is defined in RFC3550. The IBEG does not generate a supplementary RTP packet.

The IBEG 3.4 receives the encoded stream from the video encoder 3.3. As with the previous embodiment, the IBEG detects the video frame. The IBEG computes the corresponding RTP packet time stamp and memorizes it.

The difference with the previous embodiment is that the IBEG receives the RTP video stream generated by the encoder. It waits for the RTP packet for which the time stamp corresponds to the absolute time (or RTP time stamp) previously memorized.

Once the RTP packet received from the encoder is detected, the IBEG appends a RTP header extension to the corresponding video RTP packet. The header extension comprises the following fields:
- lOl is the unique identifier of the Interactive object. It is mandatory
- LocFlag is a flag that indicating whether the video packet is the first or one of the first packets having this video mark or not;
- FirstLoc is a time stamp of the first video frame that gathered this video tag;
- Action fields permits to indicate the activation or deactivation of the interactive sequence; it takes the values launch or cancel;
- Duration is the duration of the interactive sequence.

These fields let, among other things, the mobile terminal to avoid activating an interactive object if the remaining time of the interactive period is too small.

The IBEG inserts interactive marks in the video RTP packets referring to the same interactive object as long as the associated interactive object should be activated in the terminal, as indicated in the script received from the interactive controller.

As with the previous embodiment, several marks can be attached to a given video RTP packet in such a way interactive periods can superpose each other.

The most suited equipment for matching absolute time and RTP timestamp is the video encoder itself. As with the previous solution, the IBEG could preferably be comprised into the video encoder.

The interactive controller could also be integrated with the same device as the IBEG.

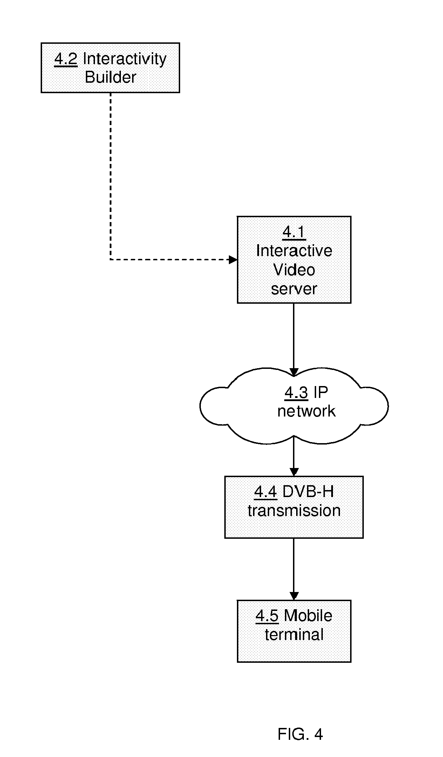

In a third embodiment represented in figure 4, the interactivity capability is part of a video program file. An interactive video server 4.1 comprises means for generating the video program with interactive marks according to one of the two solutions described in the previous embodiments.

An interactivity builder 4.2 comprises means for generating a file that comprises a video program with audio, video and subtitles tracks. It also comprises means for encoding the interactive information in the file. The interactive information is either the interactive descriptor(s), the interactive object(s) or/and the control information that helps the interactive video server generating the interactive marks according to one of the previous two embodiments.

Preferably, the format of the file is mp4, and corresponds to the MPEG-4 Part 14 standard, also referenced as ISO/IEC 14496-14:2003. Interactive descriptor(s) and interactive object(s) are encoded as private metadata.

The interactive mark related control information can be encoded according to one of the following two methods.

In a first method, a specific subtitle track is created. A subtitle track comprises a time line indication that represents the time elapsed since the beginning of the video. It also comprises the associated text to be displayed. According to the first method, the text is replaced by the interactive mark textually coded comprising the lOl and possible extra information, as listed in the second embodiment. The interactive information track is close to a subtitle track. Subtitle generation tools can be reused. The first method supports the interactive mark generation using IP based protocol as detailed in the previous two embodiments.

The ISO/IEC 14496-12:2003 standard, Coding of audio-visual objects, Part 12: ISO Base Media File Format (formal name) defines the hint track. This hint track is also called ISO base media file format. According to a second method, the hint track is used. A hint track is associated with a "normal track (e.g. audio or video). The hint track provides transport protocol related information in such a way that the server does not need to be aware of how to precisely encapsulate the related "normal track" information (e.g. video) into the transport protocol.

There is, for instance an existing H264 RTP hint track format for encoding the way to encapsulate H264 video into RTP packets. According to the second method, a RTP hint track associated with the video track is added. The hint track is modified to support the RTP header extension for encoding the interactive mark as detailed hereinabove in the second embodiment. The second method is compatible with the MPEG-4 Part 14 standard. It requires very few modifications for generating marks as defined in the second embodiment.

The interactivity builder comprises inserting means for creating the hint track. When it receives the video, the inserting means suspends the video, and inserts the mark in the hint track when appropriate.

The interactive video server 4.1 comprises scheduling means for playing out the different video program files stored in its internal memory. Some of the files are interactive enabled (generated for instance by the interactivity builder 4.2). According to the schedule, the interactive video server opens the interactive file in advance and sends through appropriate network means (the IP network 4.3 and the DVB-H network 4.4) the interactive descriptor(s) and interactive object(s) if present in the file. When it is the time to play the file, the video server interprets the interactive related information track and generates the interactive marks accordingly.

The interactive video server comprises means for interpreting information track, and means for generating the interactive marks. The server receives the video file from the interactivity builder. It interprets the interactive mark enclosed in the subtitle track. It does not consider the subtitle mark as a legacy subtitle mark; but it comprises means for identifying the interactive mark enclosed in the subtitle mark. Having identified the interactive mark, the server comprises means for generating interactive marks according to any one of the two embodiments described hereinabove.

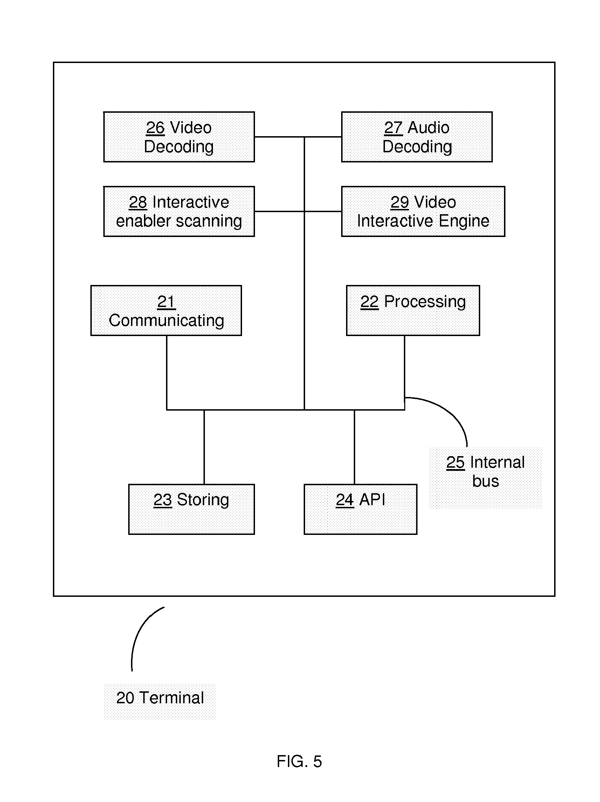

The terminal is depicted in figure 5. It comprises processing means 22 for running among others the audio-video applications. It comprises storing means 23 for storing among others the interactive Objects.

The terminal also comprises audio-video applications, gathered in the audio-video processing means not represented. It comprises the video decoding means 26, the audio decoding means 27 and the interactive enabler scanning means 28.

The terminal receives the IOD from the interactive service operator in advance through the communicating means 21. It may be the same channel as the video program channel, or another channel such as the return channel as indicated in the figure 1. According to the embodiment, the IOD is sent by the interactive controller. The IOD comprises an 101 and a reference to the video stream it is associated as detailed hereinabove. The Video Interactive Engine means 29 stores the lOD in the storing means 23. The terminal may receive an IOD corresponding to an interactive service. It may also receive a set of IOD's corresponding to a set of interactive services. The IOD's may be encrypted so that the terminal can check their integrity in a manner well known per se.

On reception of the IOD, the terminal requests the audio-video processing means, and in particular, the interactive mark detector means, to perform the detection of the associated mark (i.e. the IOI) for the referenced video stream. According to the first embodiment as described above, the detection is performed on the interactive stream. According to the first embodiment as described above, the detection is performed on the RTP header.

The IOD may also only comprise an lOl without any reference to the video stream it is associated. In that case, the Video Interactive Engine requests the audio-video processing means to perform the detection of the associated mark for all the incoming video streams.

The terminal gets the IOD and the interactive object if not present within the IOD. It then waits for the corresponding video mark by scanning the related (or any) incoming IP based traffic. The audio-video processing means scans the video related streams in order to detect the mark indicating the beginning of an interactivity period.

The audio-video processing means indicates to the video interactive engine when it has detected the corresponding stream, with the time when the video will be displayed. The video interactive engine triggers the related interactive objects accordingly during the entire interactivity period. The IOD remains in the storing means until the time limit indicated with the TTL.

The audio-video processing means may detect a mark without any request from the video interactive engine. This may correspond to the case where the video interactive engine has not received any IOD. In that case, when it has detected a mark the audio-video processing means informs the video interactive engine. If no corresponding interactive descriptor is present, the video interactive engine may get the corresponding interactive descriptor and possibly related objects through any bidirectional network means (e.g. the return channel) communicating with a server not represented.

The IOD and the interactive object can be transported through any alternative means like a multicast file delivery protocol such as FLUTE, as defined in RFC 3926, or with a point-to-point communication such as a cellular network as indicated in figure 1. For example, in digital television such as IPTV and DVB-H the electronic service guide is delivered to the terminal in advance. According to the embodiments, the electronic service guide may transport the IOD associated with one particular service.

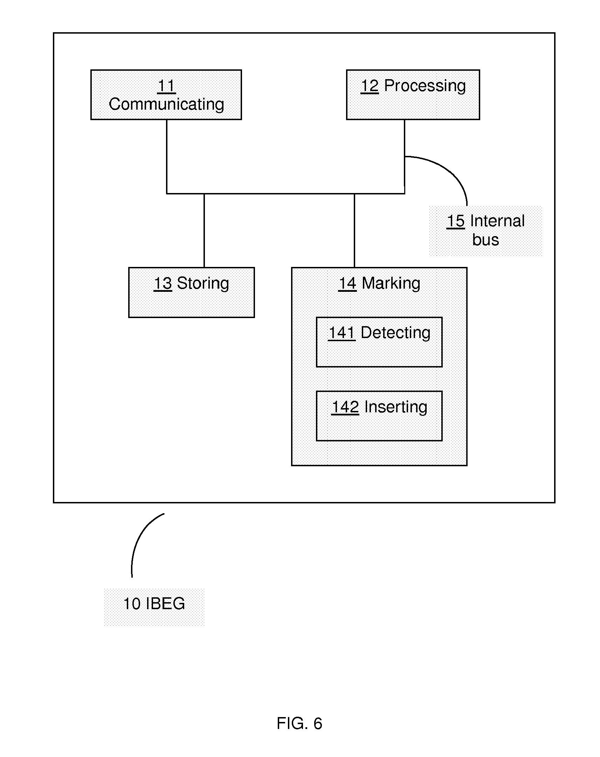

The IBEG device is represented in figure 6. It is intended to perform the interactive object event bridge/generator functions. It comprises processing means 12, communicating means 11, storing means 13 and marking means 14. The IBEG comprises an internal bus 15.

The communicating means comprise means for receiving video data from the video source, the video decoder or the video encoder. It comprises means for sending and receiving data with the video encoder and the interactive controller. It also comprises means for sending data to the mobile terminals.

The marking means is intended to provide means for creating and inserting interactive information that corresponds to a video. The marking means then carries out the rules as defined in the script received from the interactive controller. The script defines the behavior of the IBEG regarding the interactive mark generation. The detecting means 141 are intended to detect the video frame and / or the mark included into the video frame.

The inserting means 142 are intended to insert the mark into the video frame. The IBEG may insert the mark as the result of the detection of the related video. It may also insert the mark at the reception of an event from the interactive controller, without performing any video selection.

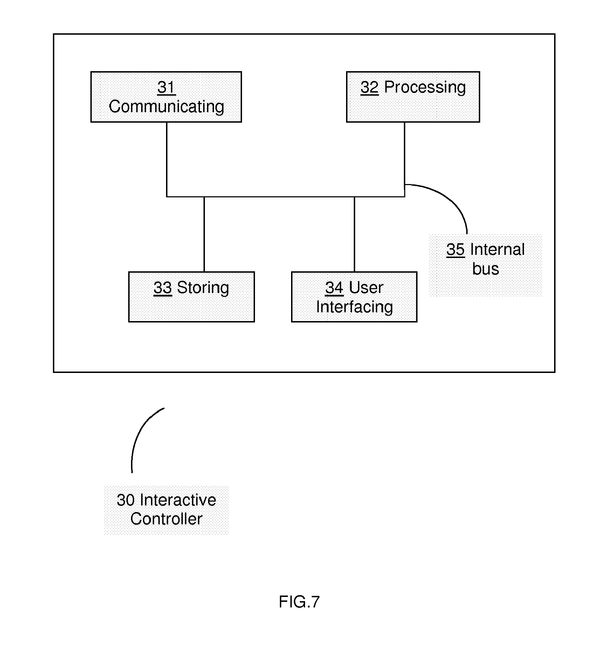

The interactive controller 30 is represented in figure 7. It is intended to control and configure the IBEG. It configures the IBEG through configuration scripts it sends to the IBEG.

It comprises processing means 32, communicating means 31, storing means 33 and user interfacing means 34. It comprises an internal bus 35.

The communicating means is intended to communicate with the IBEG, and with the terminal. The interactive controller may communicate through any network protocol, and in particular through a TCP/IP connection.

The interactive controller builds and sends the IOD to the terminal. The IOD is also managed through the user interface by an interactive service operator.

An interactive service operator accesses the user interface 34 to manage the interactive service. The user interface comprises means for defining the script that is sent to the IBEG. The user interface also comprises means for generating an event.

The event may be generated directly through the user interface. In order to directly generating the event, a push button is used in the Interactive controller for generating the event. When the button is pressed, an event is sent to the IBEG so that the IBEG generates an interactive mark at that moment. Of course, any other means for generating an event may be used. When the IBEG receives the event, it behaves according to what has been defined in the script previously sent by the Interactive controller.

The event generation may also be managed at the interactive controller; the operator defines some rules for automatically sending the event to the IBEG. The rule is an event generation that does not depend on the video program. The generation of the event may be based on a schedule; at a certain time, the event is regularly sent to the IBEG. It may also be based on any external input, such as an emergency message.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. Method for generating an interactive mark, **characterized in that** it comprises, at a generating device (2.4, 3.4), the steps of:
- receiving (S3) video packets of a video stream,
- creating an interactive mark intended to enable an interactive service during a period of the video stream,
- periodically inserting the interactive mark into Internet Protocol packets, noted IP-based packet, said IP-based packets being synchronized with packets that transport the associated video stream,
- sending (S7) the IP-based packets.

2. Method according to claim 1, **characterized in that** prior to creating the interactive mark, it comprises the step of receiving a script comprising information on the way to create and send the interactive mark.

3. Method according to any one of the preceding claims, **characterized in that** the interactive mark comprises information on the way to manage the interactivity at the receiver of the interactive mark.

4. Method according to any one of the preceding claims, **characterized in that** the step of creating an interactive mark comprises the step of using a detected interactive mark embedded in the received video stream.

5. Method according to any one of the preceding claims, **characterized in that** the step of creating an interactive mark is performed on reception of an event.

6. Method for generating an interactive mark, **characterized in that** it comprises, at a generating device (2.4, 3.4), the steps of:
- receiving (S3) a video packet of a video stream,
- creating an interactive mark,
- receiving an IP-based packet embedding the video packet,
- inserting the interactive mark into the IP-based packet,
- sending (S7) the IP-based packet.

7. Method in a terminal for setting up interactivity, **characterized in that** it comprises the steps of receiving a set of information that defines the behavior of the terminal when detecting an interactive mark.

8. Method according to claim 7, **characterized in that** it further comprises the step of:
- receiving the interactive mark in a first IP-based packet,
- receiving the associated video stream,
- generating the interactive object corresponding to the mark, and
- launching the interactive service with the associated video stream.

9. Method according to claim 8, **characterized in that** the interactive mark comprises information on the way to set up the interactive service at the receiver of the interactive mark.

10. Method according to claim 8 or 9, **characterized in that** it comprises the step of:
- identifying in the interactive mark the remaining time for performing an interactive service, and
- launching the interactive service if the remaining time is long enough.

11. Method for inserting an interactive mark within a MP4 file comprising the step of:
- embedding an interactive track into either the subtitle track or the hint track of an MP4 file,
- sending said file.

12. Method for transporting an interactive mark within a MP4 file comprising the step of:
- receiving a MP4 file with an interactive mark inserted either in the subtitle track or in the hint track,
- identifying the interactive mark,
- synchronizing the interactive mark with said video packet,
- creating an IP-based packet comprising the interactive mark,
- sending the IP-based packet.

13. Computer program product, **characterized in that** it comprises program code instructions for executing the steps of the process according to any one of the preceding claims when said program is executed on a computer.
